# EUROPEAN PATENT APPLICATION

(11) **EP 2 487 133 A1**
(43) Date of publication of application: **15.08.2012**
(21) Application number: 12164963.6
(22) Date of filing: 05.12.2008
(51) Int. Cl.: C01B 3/00, C01B 6/00, C01B 3/06

(54) **A hydrogen storage material and a process for release of hydrogen**

(30) Priority: 05.12.2007 US 992383 P
(62) Divisional of application: 08856812.6
(71) Applicant: National University of Singapore, Singapore 119077 (SG)
(72) Inventor: The designation of the inventor has not yet been filed
(74) Representative: Hoffmann, Benjamin

(57) **Abstract**

There is disclosed a hydrogen storage material which comprises a composite comprising : (i) at least one of a M-nitrogen compound; and (ii) a compound comprising (Y-Z)-R bonds. M is a metal or metalloid; Y is an element selected from Group 13 of the Periodic Table of Elements; Z is an element selected from Group 15 of the Periodic Table of Elements; and R is hydrogen (H) or a hydrocarbyl.

## Description

### Technical Field

The present invention generally relates to a material for use in storing hydrogen and to a process for release of hydrogen.

### Background

Hydrogen-based energy is one of the cleanest of the currently known energy sources, and it will undoubtedly play a part in the energy supply of this century. Heavy environmental pollution due to combustion of fossil fuel and depletion of non-renewable energy sources emerge as two serious problems.

Hydrogen-based energy sources are considered to be the most promising candidates for solving these problems, as this kind of energy can replace fossil fuel in most applications. The biggest challenge in on-board hydrogen utilisation (i.e. as fuel for vehicle, portable computer, phone, etc.) is the low hydrogen storage capacity that existing systems possess. Development of hydrogen storage media is of great importance.

Currently, there are four systems for hydrogen storage: Liquid hydrogen, Compressed hydrogen gas, Cryo-adsorption systems, and metal hydride systems.

Applications of hydrogen in pure form (liquid hydrogen or compressed hydrogen gas) are mostly utilised for large-scale or stationary purposes, since the weight of containers for storage of hydrogen liquid or compressed gas is normally too prohibitive for uses where hydrogen is used in limited scope. For vehicular or any other portable applications, hydrogen stored in solid-state materials seems to be the best solution. Thus, cryo-adsorption systems and metal hydride systems are the two most promising systems.

The cryo-adsorption systems show advantages in moderate weight and volume. In this system, hydrogen molecules are physically bound to the surface of activated carbon at liquid nitrogen temperature. Under optimised conditions, the hydrogen storage capacity of activated carbon may reach 7 wt% based on the weight of activated carbon. The disadvantages of this system relate to the critical conditions required (i.e. cryogenic conditions).

Metal hydrides have been proposed as systems for hydrogen storage. Hydrogen is chemisorbed by metal or metal alloys with corresponding formation of metal hydrides. However, it is commonly known that some metal hydrides suffer from high operating temperature (above 300°C for desorption, with an equilibrium hydrogen pressure of up to 100 kPa), slow hydrogen charge and discharge kinetics and relatively low density.

At the same time, although some compounds are known to absorb hydrogen at relatively low temperatures and pressures, the subsequent desorption of hydrogen may be relatively low under such conditions. This means that the compounds have low reverse absorption capacity which either makes them unsuitable or inefficient for use as hydrogen storage materials.

Currently, one of the most promising hydrogen storage compounds is ammonia borane. Ammonia borane is a compound which contains approximately 19.6 wt% hydrogen, which is among the highest of the hydrides. However, because ammonia borane has high kinetic barrier, complete dehydrogenation of this compound requires temperatures as high as 500°C.

More recently, several methods for generating hydrogen from ammonia borane hydrides have been described. However, disadvantages of these known methods are that the reactions were solid-state reactions, which are known to be confined by the mobility of the reacting species, and therefore, require large amounts of kinetic energy.

There is a need to provide materials for use in hydrogen storage materials that overcome, or at least ameliorate, one or more of the disadvantages described above. There is also a need to provide a process for using hydrogen storage materials that overcome, or at least ameliorate, one or more of the disadvantages described above.

There is also a need to provide materials for use in hydrogen storage materials that are capable of releasing hydrogen at relatively low temperatures and pressures.

### Summary

According to a first aspect, there is provided a hydrogen storage material comprising at least one of:
(a) an optionally substituted M-amino-borane complex; and
(b) a composite comprising: (i) at least one of a M-nitrogen compound; and (ii) a compound comprising (Y-Z)-R bonds;
   wherein
   M is a metal or metalloid;
   Y is an element selected from Group 13 of then Periodic Table of Elements;
   Z is an element selected from Group 15 of the Periodic Table of Elements; and
   R is hydrogen (H) or a hydrocarbyl.

Advantageously, the disclosed materials may be used to store hydrogen and, when exposed to certain conditions, may be used to release the stored hydrogen gas.

According to a second aspect, there is provided a process for release of hydrogen' comprising the step of controlling the temperature of an optionally substituted M-amino-borane complex to release hydrogen, wherein M is a metal or metalloid.

According to a third aspect, there is provided a process for release of hydrogen comprising the steps of:
(a) providing M-nitrogen compounds;
(b) providing a compound comprising (Y-Z)-R bonds
   wherein
   M is a metal or metalloid;
   Y is an atom selected from Group 13 of the Periodic Table of Elements;
   Z is an atom selected from Group 15 of the Periodic Table of Elements; and
   R is hydrogen (H) or a hydrocarbyl; and
(c) allowing the M-nitrogen compounds to react with said compound comprising (Y-Z)-R bonds to release hydrogen.

Advantageously, in one embodiment, the compound comprising (Y-Z)-R bonds may be in solution to thereby speed the rate of reaction between the reactants and thereby the kinetics of release of hydrogen.

### Definitions

The following words and terms used herein shall have the meaning indicated:

The term "compound" and grammatical variations thereof is given a broad meaning, such as the result formed by a union of elements or parts especially, but not exclusively, a distinct substance formed by chemical union of two or more ingredients in definite proportion by weight.

The term "metal-nitrogen compound" and grammatical variations thereof, means a compound that includes at least one metal atom and at least one nitrogen atom. The metal atom and the nitrogen atom may, or may not be, bonded to each other or to atoms of other elements.

The term "amino" or "amine" as used herein refers to groups of the form -NRₐR_{b} wherein Rₐ and R_{b} are individually selected from the group including but not limited to hydrogen, optionally substituted alkyl, optionally substituted alkenyl, optionally substituted alkynyl, and optionally substituted aryl groups.

The term "imino" as used herein refers to groups of the form -NH.

The term "imine" refers to any compound containing a carbon to nitrogen double bond, and used herein refers to groups of the form NR₂, wherein R₂ is selected from the group including but limited to hydrogen, hydrocarbons, or other groups that can bond to N.

The term "borane" as used herein refers to groups of the form -BHₓ, wherein x may be 1, 2 or 3.

The term "aliphatic hydrocarbon" refers to a branched, straight or cyclic hydrocarbon chain.

The term "alkyl group" includes within its meaning monovalent ("alkyl") and divalent ("alkylene") straight chain or branched chain. For example, the term alkyl includes, but is not limited to, methyl, ethyl, 1-propyl, isopropyl, 1-butyl, 2-butyl, isobutyl, tert-butyl, and the like. The term "lower alkyl" means alkyls having from 1 to 6 carbon atoms, eg, 1, 2, 3,4,5 or 6 carbon atoms.

The term "alkenyl group" includes within its meaning monovalent ("alkenyl") and divalent ("alkenylene") straight or branched chain unsaturated aliphatic hydrocarbon groups having at least one double bond, of either E, Z, cis or trans stereochemistry where applicable, anywhere in the alkyl, chain. Examples of alkenyl groups include but are not limited to ethenyl, vinyl, allyl, 1-methylvinyl, 1-propenyl, 2-propenyl, 2-methyl-1-propenyl, 2-methyl-1-propenyl, 1-butenyl, 2-butenyl, 3-butentyl, 1,3-butadienyl, and the like. The term "lower alkenyl" means alkenyls having from 2 to 6 carbon atoms, eg, 2, 3,4,5 or 6 carbon atoms.

The term "alkynyl group" as used herein includes within its meaning monovalent ("alkynyl") and divalent ("alkynylene") straight or branched chain unsaturated aliphatic hydrocarbon groups having at least one triple bond anywhere in the carbon chain. Examples of alkynyl groups include but are not limited to ethynyl, 1-propynyl, 1-butynyl, 2-butynyl, and the like. The term "lower alknyl" means alknyls having from 2 to 6 carbon atoms, eg, 2, 3,4,5 or 6 carbon atoms.

The term "hydrocarbyl" group as used herein refers to a group having one or more carbon atoms directly attached to the remainder of a molecule and having a hydrocarbon or predominantly hydrocarbon character.

The term "optionally substituted" as used herein means the group to which this term refers may be unsubstituted, or may be substituted with one or more groups independently selected from alkyl, alkenyl, alkynyl, thioalkyl, cycloalkyl, cycloalkenyl, heterocycloalkyl, halo, carboxyl, haloalkyl, haloalkynyl, hydroxyl, alkoxy, thioalkoxy, alkenyloxy, haloalkoxy, haloalkenyloxy, nitro, amino, nitroalkyl, nitroalkenyl, nitroalkynyl, nitroheterocyclyl, alkylamino, dialkylamino, alkenylamine, alkynylamino, acyl, alkenoyl, alkynoyl, acylamino, diacylamino, acyloxy, alkylsulfonyloxy, heterocycloxy, heterocycloamino, haloheterocycloalkyl, alkylsulfenyl, alkylcarbonyloxy, alkylthio, acylthio, phosphorus-containing groups such as phosphono and phosphinyl, aryl, heteroaryl, alkylaryl, alkylheteroaryl, cyano, cyanate, isocyanate, - C(O)NH(alkyl), and -C(O)N(alkyl)₂.

As used herein the term "comprising" means "including principally, but not necessarily solely". Variations of the word "comprising", such as "comprise" and "comprises", have correspondingly varied meanings.

As used herein, the term "about", in the context of concentrations of components of the formulations, typically means +/- 5% of the stated value, more typically +/- 4% of the stated value, more typically +/-3% of the stated value, more typically, +/- 2% of the stated value, even more typically +/- 1% of the stated value, and even more typically +/- 0.5% of the stated value.

Throughout this disclosure, certain embodiment may be disclosed in a range format. It should be understood that the description in range format is merely for convenience and brevity and should not be construed as an inflexible limitation on the scope of the disclosed ranges. Accordingly, the description of a range should be considered to have specifically disclosed all the possible sub-ranges as well as individual numerical values within that range. For example, description of a range such as from 1 to 6 should be considered to have specifically disclosed sub-ranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

### Detailed Disclosure of Embodiments

Exemplary, non-limiting embodiments of a hydrogen storage material and a process for release of hydrogen will now be disclosed.

The hydrogen storage material comprising at least one of:
(c) an optionally substituted M-amino-borane complex; and
(d) a composite comprising: (i) at least one of a M-nitrogen compound; and (ii) a compound comprising (Y-Z)-R bonds;
   wherein
   M is a metal or metalloid;
   Y is an element selected from Group 13 of the Periodic Table of Elements;
   Z is an element selected from Group 15 of the Periodic Table of Elements; and
   R is hydrogen (H) or a hydrocarbyl.

The M-amino-borane complex and composite disclosed herein exhibit higher or comparable hydrogen storage capacity at relatively low temperatures and/or pressures. The M-amino-borane complex and composite disclosed herein can be used in materials for hydrogen storage and release.

Of the factors that govern the suitable conditions for release, temperature and hydrogen pressure are important. In the M-amino-borane complex and composite disclosed herein, at lower temperatures, hydrogen release can be efficiently carried out under lower hydrogen pressure.

In one embodiment, the M-nitrogen compound is selected from the group consisting of a metal nitride, metalloid nitride, a metal amide, metalloid amide, a metal imide, metalloid imide, a metal hydride-nitride and a metalloid hydride-nitride. Exemplary metal nitrides include Lithium Nitride, Beryllium Nitride, Magnesium Nitride, Calcium Nitride and Aluminium Nitride. Exemplary metal amides include Lithium Amides, Sodium Amides, Potassium Amides, Beryllium Amides, Magnesium Amides, Calcium Amides, Barium amide and Aluminium Amides. Exemplary metal Imides include Lithium Imides, Beryllium Imides, Magnesium Imides, Calcium Imides, Barium imide and Aluminium Imides. Exemplary metal hydride-nitride include Lithium nitride-Hydride, Magnesium nitride-Hydride, Calcium nitride-Hydride and Aluminium nitride-Hydride.

The M-nitrogen compounds also include ternary or higher compounds, such as, for example, LiAl(NH₂)₄, Li₃Na(NH₂)₄, MgNa(NH₂)₃, and NaAl(NH₂)₄, Li₂Mg(NH)₂, Li₂Mg₂(NH)₃, Li₂Ca(NH)₂, MgCa(NH)₂, LiAl(NH)₂, NaₓMg(NH)_{1+x/2}, LiMgN, LiCaN, Li₃AlN₂, Li₃BN₂, MgCaN, and mixtures thereof.

In one embodiment, the M-amino-borane complex may be expressed by the nominal general formula:

MₜZᵥYᵤHₚRₑ

wherein the atomic ratio is:
t:u is greater than 0 and less than 3, or greater than 0 and less than 2, or greater than 0 and less than 1;
v:u is greater than 0 and less than 5, or greater than 0 and less than 4, or greater than 0 and less than 3, or greater than 0 and less than 2;
p:u is greater than 0 and less than 20, or greater than 0 and less than 15, or greater than 0 and less than 10, or greater than 0 and less than 5; and
e:u is between 0 to less than 9, or between 0 and less than 7, or between 0 and less than 5, or between 0 and less than 3. Accordingly, the in one embodiment, the M-amino-borane is optionally substituted with a hydrocarbyl (R).

In one embodiment, M may be a metal selected from the group consisting of Group 1 of the Periodic Table of Elements, Group 2 of the Periodic Table of Elements and Aluminium (AI). In one embodiment, M may be selected from the group consisting of Lithium (Li), Sodium (Na), Potassium (K), Beryllium (Be), Magnesium (Mg), Calcium (Ca), Barium (Ba) and Aluminum (Al).

In one embodiment, Y is Boron (B) and Z is Nitrogen (N). Accordingly, in one embodiment, the compound comprising (Y-Z)-R is selected from the group consisting of linear, branched, cyclic or polymeric ammonia borane, ammonia triborane, aminoboranes, iminoboranes, borazine, borazanes, amine boranes, and imine boranes.

Accordingly, in the composite, the M-nitrogen compound may form complexes with one of the aforementioned (Y-Z)-R compounds. Exemplary complexes that may be formed include lithium aminoborane, sodium aminoborane, magnesium aminoborane, calcium aminoborane, aluminium aminoborane, lithium aminotriborane, sodium aminotriborane, magnesium aminotriborane, calcium aminotriborane and aluminium aminotriborane.

In one embodiment, an alkali metal aminoborane is formed by reacting ammonia borane (AB) with an organo-alkali-metal complex. In one embodiment, Lithium aminoborane having a composition formula of LiNH₂BH₃ can be synthesized by reacting a butyl-lithium complex (Bu-Li) with AB dissolved in a suitable solvent. The AB may be dissolved in a polar organic solvent such as tertrahydrofuran (THF) . LiNH₂BH₃ desorbs four (4) equivalent H and converts to a white (or colorless) substance with the chemical composition formula of LiNBH in a temperature range from -70 to 300 °C. LiNH₂BH₃ is an analogues of AB. Without being bound by theory, it is thought that the substitution of H on N in AB by a more electron donating Li alters the electronic structure, and therefore, changes the hydrogen storage properties.

In one embodiment, the R is a hydrocarbyl, R may be selected from an optionally substituted aliphatic hydrocarbon, an optionally substituted aromatic hydrocarbon and heterocyclic hydrocarbon.

The R may be an aliphatic hydrocarbon having a low number of carbon atoms. In one embodiment, the aliphatic hydrocarbon R may be a straight or branched chain, optionally substituted alkyl, alkenyl, and alkynyl, preferably a lower alkyl, lower alkenyl and lower alkynyl.

In embodiments where R is a lower alkyl, the number of carbon atoms may be 1 to 6 carbon atoms, or 1 to 4 carbon atoms, or 1 to 2 carbon atoms. For example, the R' may be a methyl, an ethyl, and a propyl.

In embodiments where R is a lower alkenyl or lower alkynyl, the number of carbon atoms may be 2 to 6 carbon atoms, or 2 to 4 carbon atoms or 2 carbon atoms.

In embodiments where the M-amino-borane complex is substituted with a hydrocarbyl, exemplary hydrocarbyl substituted M-amino-borane complexes include an alkyl substituted amino-borane, alkyl substituted imino-borane, alkyl substituted amine-borane, alkyl substituted aminotriborane, alkyl substituted imino-triborane, and alkyl substituted amine-triborane.

The compound comprising (Y-Z)-R may be dissolved in a solvent before it is introduced to the M-nitrogen compound to form a solution of the compound comprising (Y-Z)-R. In one embodiment, the AB is dissolved in a polar organic solvent and a M-nitrogen compound in solid form, such as a Lithium nitride powder, is suspended in the AB solution to allow the Lithium nitride and AB solution to react and release hydrogen.

Hydrogen generated from the M-amino-borane complexes and the disclosed composite normally encounter high kinetic barriers if they release hydrogen while in the solid form. In particular, the species of reaction of the M-nitrogen compound and compound comprising (Y-Z)-R, if performed in solid state, are confined by the mobility of the reacting species, and therefore, need more energy to ensure the reaction (ie such as heating/ball milling). Accordingly, if at least the compound comprising (Y-Z)-R is dissolved in a solvent to form a solution, the reaction kinetic barrier is reduced to thereby allow the faster release of hydrogen. It will be appreciated that, the reactants pair may be a solution (both reactants are dissolved in solvent) or a suspension (the M-nitrogen compound being in solid form while the compound comprising (Y-Z)-R is dissolved in a solvent) or slurry (at least one of the reactants being partially dissolved in a solvent while the remaining reactants are in solid form). Preferably, the solvent is able to dissolve all or at least one of the reacting species. Advantageously, the solvent should be selected to ensure that it does not form strong chemical bonds with the reactants and should not be consumed during the hydrogen desorption process. Preferably, the solvents include polar solvents. Exemplary solvents include, ether, water, liquid ammonia, aldehydes, alcohols, ketones, amines, ionic liquids, heterocyclic compounds, esters, organic halides or mixtures of them.

The material may be capable of desorbing hydrogen at a temperature of 300°C or less.

Exemplary, non-limiting embodiments of a process for release of hydrogen will now be disclosed.

The process may comprise the step of controlling the temperature of an optionally substituted M-amino-borane complex as defined above to release hydrogen.

The controlling step may comprise the step of heating the M-amino-borane complex to a temperature in the range selected from the group consisting of between about -70°C to about 300°C, between about -70°C to about 250°C, between about -70°C to about 200°C, between about -70°C to about 150°C, between about -50°C to about 300°C, between about -30°C to about 300°C, between about -10°C to about 300°C.

The optionally substituted M-amino-borane complex may be provided in a solvent. The M-amino-borane complex may be at least partially dissolved in the solvent. The M-amino-borane complex may be completely dissolved in the solvent. The type of solvent is not limited and can be any solvent that is capable of at least partially dissolving the M-amino-borane complex. The solvent may be an organic solvent comprising an ether, an aldehyde, an alcohol, a ketone, an amine, a heterocyclic compound, an ester, an organic halide, or mixtures thereof. The solvent may be an aqueous solvent such as water, liquid ammonia, an ionic liquid, or mixtures thereof. In one embodiment, the solvent used may comprise an ether compound such as tetrahydrofuran, diethyl ether, dimethoxyethane or 2-methyltetrahydrofuran. The solvent should be chosen such that it does not form strong chemical bonding with the M-amino-borane complex and should not be consumed during the hydrogen desorption process.

In an embodiment where the optionally substituted M-amino-borane complex is provided in a solution, the controlling step may comprise the step of maintaining the solution at a temperature selected from the group consisting of between about -50 deg C to about 200 deg C, between about -50 deg C to about 150 deg C, between about -50 deg C to about 70 deg C, between about -30 deg C to about 200 deg C, between about 0 deg C to about 200 deg C, between about 0 deg C to about 100 deg C and between about 0 deg C to about 60 deg C. In one embodiment, the temperature may be about 50 deg C.

The molar ratio of M-amino-borane complex to solvent may be selected from the group consisting of about 100/1 to about 1/1000, about 100/1 to about 1/100, about 100/1 to about 1/10, about 10/1 to about 1/1000 and about 500/1 to about 1/200.

The process may comprise the steps of (a) providing M-nitrogen compounds; (b) providing a solution comprising a compound comprising (Y-Z)-R bonds as defined above; and (c) allowing the M-nitrogen compounds to react with the solution to release hydrogen.

The process may comprise the steps at least partially dissolving the compound comprising (Y-Z)-R in a suitable solvent as defined above. Exemplary solvents may include tetrahydrofuran, diethyl ether or 2-methyltetrahydrofuran. After the compound comprising (Y-Z)-R bonds is at least partially dissolved, in the solvent, the process may comprise the step of adding the M-nitrogen compounds to the solution.

The process may comprise the step of maintaining the temperature of the solution at a temperature selected from the group consisting of between about -100 deg C to about 300 deg C, about -100 deg C to about 250 deg C, about -100 deg C to about 200 deg C, about -100 deg C to about 150 deg C, about -100 deg C to about 100 deg C, about -70 deg C to about 300 deg C, about -50 deg C to about 300 deg C, about -20 deg C to about 300 deg C, about 0 deg C to about 300 deg C and between about -50 deg C to about 200 deg C.

The process may comprise the step of selecting the molar ratio of solvent to the compound comprising (Y-Z)-R bonds from the group consisting of about 100/1 to about 1/1000, about 100/1 to about 1/100, about 100/1 to about 1/10, about 10/1 to about 1/1000 and about 500/1 to about 1/200.

The temperature of the hydrogen storage material may be maintained by placing the hydrogen storage material in a reactor equipped heating facility and with temperature controller.

The hydrogen release material may be used in a vehicle, a stationary power station or a portable power device to release hydrogen as an energy source. The vehicle may comprise compartments that can contain the hydrogen storage material and the hydrogen evolved from the hydrogen storage material. The compartments may be heated up by the engine of the vehicle or the waste heat of PEM fuel cell to release hydrogen from the hydrogen storage material. The vehicle may be any device that is used for transportation. Exemplary vehicles include automobiles, motorcycles, ships, trains and aircraft.

### Brief Description Of Drawings

The accompanying drawings illustrate a disclosed embodiment and serves to explain the principles of the disclosed embodiment. It is to be understood, however, that the drawings are designed for purposes of illustration only, and not as a definition of the limits of the invention.
Fig. 1 (a) is a XRD pattern of LiNH₂BH₃ and Fig. l (b) is a diagram showing the crystal structure of LiNH₂BH₃.
Fig. 2 is a graph showing the volumetric release measurement on a synthesized LiNH₂BH₃ sample. Fig. 3 is a graph showing the isothermal hydrogen desorption from LiNH₂BH₃ and NaNH₂BH₃ samples when in the solid form.
Fig. 4 is a graph showing the time dependence of hydrogen release from LINH₂BH₃-THF solution at 50°C
Fig. 5 is a graph showing the time dependence of hydrogen release from Mg(NH₂)₂-NH₃BH₃-THF suspension at 50°C.
Fig. 6 is a graph showing the time dependence of hydrogen release from LiNH₂-NH₃BH₃ THF suspension at 50°C.
Fig. 7 is a graph showing the time dependence of hydrogen release from Li₂NH-NH₃BH₃ THF suspension at 50°C.
Fig. 8 is a graph showing the time dependence of hydrogen release from Ca₃N₂-NH₃BH₃ THF suspension at 50°C.

### Examples

Non-limiting examples of the invention will be further described in greater detail, which should not be construed as in any way limiting the scope of the invention.

### Example 1

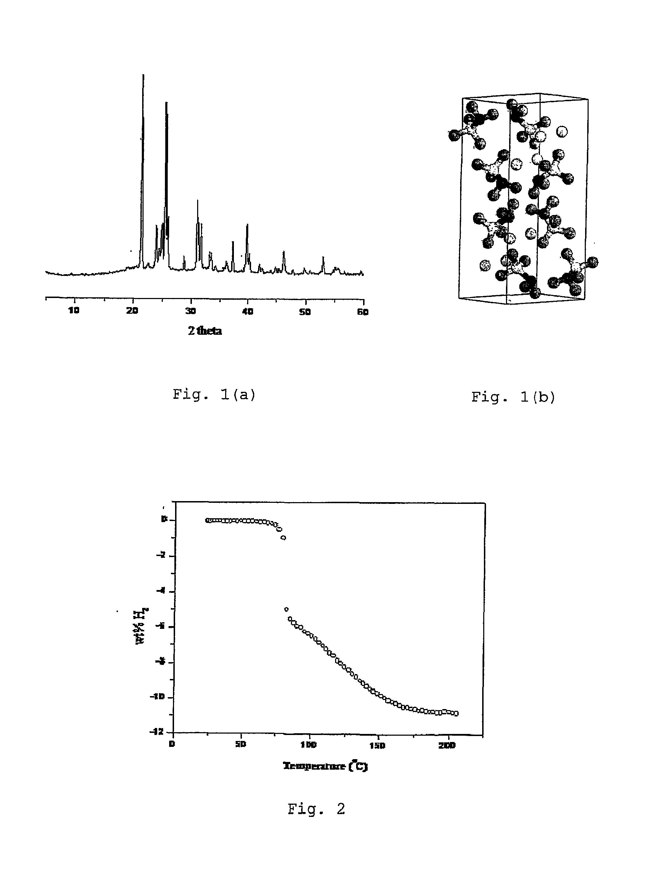

275.5 mg of ammonia borane (AB, from Sigma-Aldrich from St. Louis of Missouri of the United States of America) was dissolved in 30 ml tetrahydrofuran (THF, from Tedia Company Inc. of Fairfield of Ohio of the United States of America). 64.7 mg LiH (from Sigma-Aldrich) was added and reacted with the AB solution at ambient temperature, or about 25°C, in an autoclave. After 10 hours of reaction, 28 psi of evolved hydrogen was detected by a pressure gauge, which is equivalent to 2 H/AB+LiH. THF in the reaction residue was evaporated by applying vacuum to the autoclave. A colorless substance was obtained which was shown to be LiNH₂BH₃ by XRD measurement (as shown in Fig. 1(a) and (b)). 300 mg LiNH₂BH₃ obtained from the above reaction was placed in a Gas reaction controller supplied by Advanced Materials Corporation (Pittsburgh, Pennsylvania of the United States of America). The temperature was then raised from 25°C to 200°C at a heating rate of 2°C/min. The initial pressure is set below 0.1 bar. As shown in Fig. 2, about 11 wt% of hydrogen was released from the LiNH₂BH₃ when the temperature was 200°C.

### Example 2

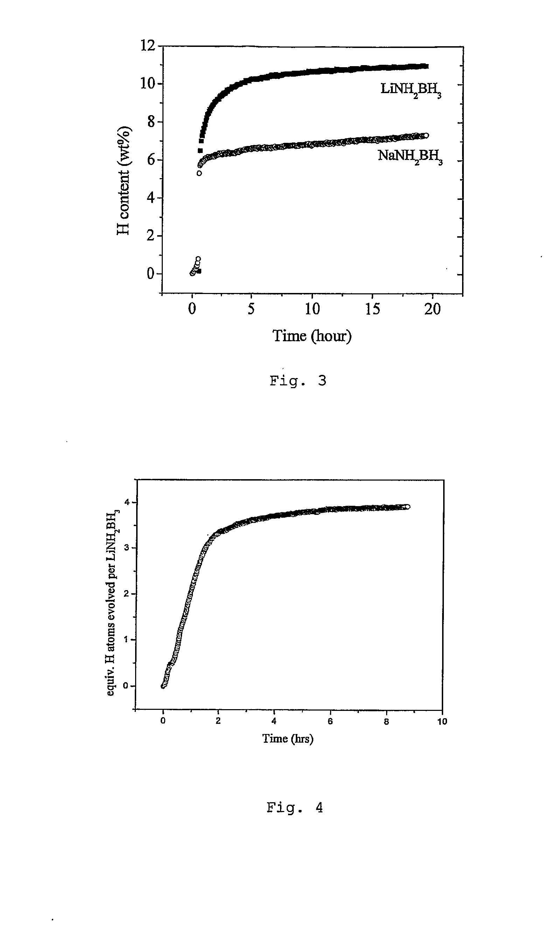

About 400 mg of LiNH₂BH₃ (synthesized according to Example 1) and NaNH₂BH₃ (synthesized according to the procedure in Example 1 but using NaH rather than LiH to react with the NH₃BH₃-THF solution) was each placed in a Gas-reaction controller. The temperature was raised to and held at 91°C for LiNH₂BH₃ and 89°C for NaNH₂BH₃. As shown in Fig. 3, about 10.9 wt% of hydrogen was released from the LiNH₂BH₃ sample, and 7.5 wt% of hydrogen was released from NaNH₂BH₃.

### Example 3

300mg of LiNH₂BH₃ synthesized according to Example 1 was dissolved in 30 ml THF. The resultant solution was placed into an autoclave equipped with a pressure gauge and heated to 50°C. As shown in Fig. 4, four (4) equivalent H atom/LiNH₂BH₃ evolved from the solution within 9 hours.

### Example 4

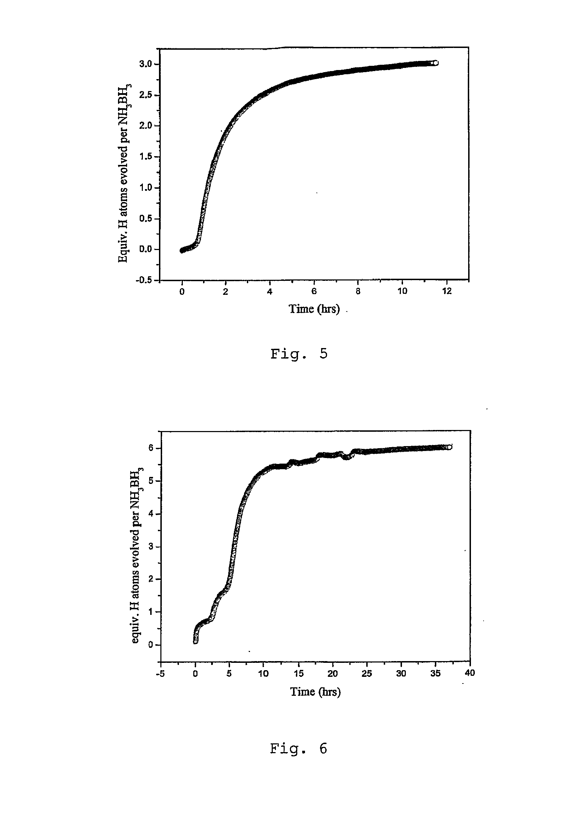

275.6 mg of NH₃BH₃ was dissolved in 30 ml THF. 471.6 mg Mg(NH₂)₂ (which was synthesized by reacting Mg and NH₃ according to the method described in Journal of Alloys and Compounds 395 (2005) 209-212) was added to make a suspension. The resultant suspension was placed into an autoclave equipped with a pressure gauge and heated to 50°C. As shown in Fig. 5, about three (3) equivalent H atom/AB desorbed from the suspension within 12 hours.

### Example 5

275.6 mg NH₃BH₃ was dissolved in 30 ml THF. 193.7 mg LiNH₂ (from Sigma-Aldrich) was added to make a suspension. The resultant suspension was placed into an autoclave equipped with a pressure gauge and heated to 50°C. As shown in Fig. 6, six (6) equivalent H atom/AB desorbed from the suspension within 25 hours.

### Example 6

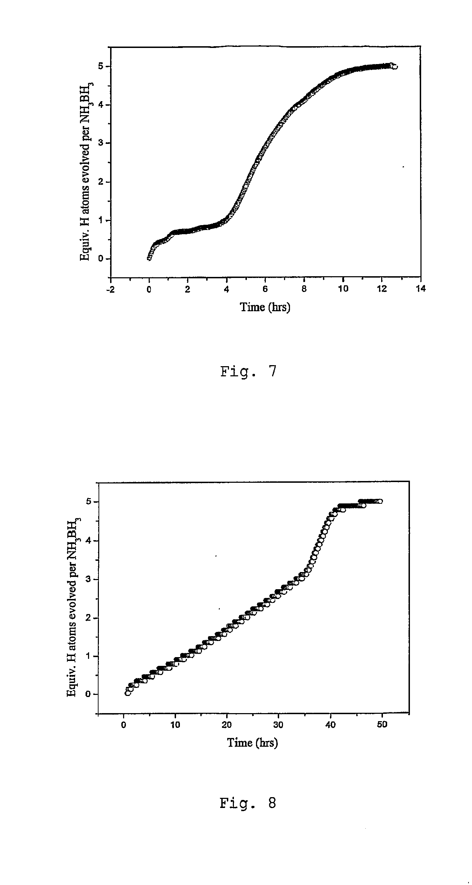

275.6 mg NH₃BH₃ was dissolved in 30 ml THF. 122.1 mg Li₂NH (synthesized by referring to Nature 420 (2002) 302) was added to make a suspension. The resultant suspension was placed into an autoclave equipped with a pressure gauge and heated to 50°C. As shown in Fig. 7, 5 equivalent H atom/AB desorbed from the suspension within 13 hours.

### Example 7

275.6 mg NH₃BH₃ was dissolved in 30 ml THF. 415.4 mg Ca₃N₂ (from Sigma-Aldrich) was added to make a suspension. The resultant suspension was placed into an autoclave equipped with a pressure gauge and heated to 50°C. As shown in Fig. 8, five (5) equivalent H atom/AB desorbed from the suspension within 50 hours.

### Applications

The disclosed hydrogen storage materials may be used to store and release hydrogen. Accordingly, the disclosed hydrogen storage materials may be used in a hydrogen storage reservoir to retain and release hydrogen gas. The hydrogen storage materials are useful materials that, unlike storage of liquid hydrogen or compressed hydrogen gas, does not require equipment to compress the hydrogen gas thereon, which reduces the cost of storage.

The disclosed materials are not only capable of storing hydrogen at relatively low temperatures and pressures, but are capable of releasing large amounts of hydrogen.

It will be apparent that various other modifications and adaptations of the invention will be apparent to the person skilled in the art after reading the foregoing disclosure without departing from the spirit and scope of the invention and it is intended that all such modifications and adaptations come within the scope of the appended claims.

## Claims

1. A hydrogen storage material comprising
a composite comprising: (i) at least one of a M-nitrogen compound; and (ii) a compound comprising (Y-Z)-R bonds;
wherein
M is a metal or metalloid;
Y is an element selected from Group 13 of the Periodic Table of Elements;
Z is an element selected from Group 15 of the Periodic Table of Elements; and
R is hydrogen (H) or a hydrocarbyl.

2. A material as claimed in claim 1, wherein the M-nitrogen compound is selected from the group consisting of a metal nitride, a metalloid nitride, a metal amide, a metalloid amide, a metal imide, metalloid imide, a metal hydride-nitride and a metalloid hydride-nitride.

3. A material as claimed in claim 1 or claim 2, further comprising an optionally substituted M-amino-borane complex.

4. A material as claimed in claim 3, wherein the M-amino-borane is substituted with a hydrocarbyl.

5. A material as claimed in any one of claims 3 to 4,
wherein said M-amino-borane complex is expressed by the nominal general formula:
MₜZᵥYᵤH_{P}Rₑ
wherein the atomic ratio is:
t:u is greater than 0 and less than 3;
v:u is greater than 0 and less than 5;
p:u is greater than 0 and less than 20; and
e:u is between 0 to less than 9.

6. A material as claimed in any one of the preceding claims, wherein Y is Boron (B); and/or
wherein Z is Nitrogen (N); and/or
wherein R is selected from an optionally substituted aliphatic hydrocarbon, an optionally substituted aromatic hydrocarbon and heterocyclic hydrocarbon; and/or
wherein M is a metal selected from the group consisting of Group 1 of the Periodic Table of Elements, Group 2 of the Periodic Table of Elements and Aluminium (AI), more preferably
M is selected from the group consisting of Lithium (Li), Sodium (Na), Potassium (K), Beryllium (Be), Magnesium (Mg), Calcium (Ca) and Barium (Ba).

7. A material as claimed in any one of the preceding claims, wherein the compound comprising (Y-Z)-R is selected from the group consisting of linear, branched, cyclic or polymeric ammonia borane, ammonia triborane, aminoboranes, iminoboranes, borazine, borazanes, amine boranes, and imine boranes.

8. A material as claimed in any one of the preceding claims, wherein the molar ratio of M-nitrogen compound to (Y-Z)-R is 20/1 to 1/200.

9. A process for release of hydrogen comprising the steps of:
(a) providing M-nitrogen compounds;
(b) providing a compound comprising (Y-Z)-R bonds;
wherein
M is a metal or metalloid;
Y is an atom selected from Group 13 of the Periodic Table of Elements;
Z is an atom selected from Group 15 of the Periodic Table of Elements; and
R is hydrogen (H) or a hydrocarbyl; and
(c) allowing the M-nitrogen compounds to react with said compound comprising (Y-Z)-R bonds to release hydrogen.

10. A process as claimed in claim 9, wherein the compound comprising (Y-Z)-R bonds is in solution.

11. A process as claimed in claim 9 or claim 10, wherein step (c) comprises maintaining the M-nitrogen compounds and compound comprising (Y-Z)-R bonds at a temperature between -100 deg C to 300 deg C.

12. A process as claimed in claim 11, wherein step (c) comprises maintaining the M-nitrogen compounds and compound comprising (Y-Z)-R bonds at a temperature between -50 deg C to 200 deg C.

13. A process as claimed in claim 10, wherein the molar ratio of solvent to the compound comprising (Y-Z)-R bonds in said solution is from 100/1 to 1/1000.
